# EUROPÄISCHE PATENTSCHRIFT

(11) **EP 1 309 805 B1**
(45) Veröffentlichungstag und Bekanntmachung des Hinweises auf die Patenterteilung: **02.11.2005**
(21) Anmeldenummer: 01969413.2
(22) Anmeldetag: 18.07.2001
(51) Int. Cl.: F16D 33/00

(54) **HYDRODYNAMISCHER WANDLER**
HYDRODYNAMIC CONVERTER
CONVERTISSEUR HYDRODYNAMIQUE

(30) Priorität: 16.08.2000 DE 10039811
(43) Veröffentlichungstag der Anmeldung: 14.05.2003
(73) Patentinhaber: Voith Turbo GmbH & Co. KG, 89522 Heidenheim (DE)
(72) Erfinder: WAHL, Georg, 74564 Crailsheim (DE); SCHIRLE, Hans, 74597 Stimpfach (DE); GANTAR, Marjan, 1000 Ljubljana (SI); PAVLIN, Rok, 1000 Ljubljana (SI); FLORJANCIC, Dusan, 4274 Zirovnica (SI)
(74) Vertreter: Dr. Weitzel & Partner
(86) Internationale Anmeldenummer: PCT/EP2001/008274
(87) Internationale Veröffentlichungsnummer: WO 2002/014706

(56) Entgegenhaltungen:
- FR-A- 840 270
- US-A- 3 797 243
- US-A- 5 394 694
- US-A- 6 502 678

## Beschreibung

Die Erfindung betrifft einen hydrodynamischen Wandler mit einem torusförmigen Arbeitsraum, einem Pumpenrad, einem Turbinenrad und einem Kranz verstellbarer Leitschaufeln.

Die Erfindung betrifft insbesondere einen Wandler zur Anwendung bei einem Maschinensatz, bei dem der Antrieb eine Gasturbine ist, und die Arbeitsmaschine ein Kompressor. Dabei geht es um außerordentlich hohe Leistungen, die in der Größenordnung von 20 Megawatt und darüber liegen. Aufgrund dieser extremen Leistungen weisen die Maschinen auch außerordentlich hohe umlaufende Massen auf, die naturgemäß wieder zu besonderen Problemen führen.

Ein Wandler nach dem Oberbegriff des Anspruchs 1 ist aus US-A-3,797,243 bekannt.

Die Anforderungen an einen Maschinensatz der genannten Art, insbesondere mit einer Gasturbine und einem Kompressor, sind die folgenden:
* der Kompressor muß in einer Weise angefahren werden, ohne daß der Antrieb überlastet wird
* der Kompressor muß auf eine Drehzahl hochgefahren werden, die gleich der Drehzahl des Antriebs ist, das heißt die beiden Maschinen müssen synchron zueinander laufen
* nach Erreichen des Synchronlaufes muß eine direkte mechanische Triebverbindung zwischen Antrieb und Arbeitsmaschine hergestellt werden
* bei manchen Maschinensätzen der genannten Art, insbesondere umfassend eine Gasturbine als Antrieb und einen Kompressor als Arbeitsmaschine, kann es notwendig sein, die Gasturbine dauernd laufen zu lassen, und zwar auch dann, wenn der Kompressor abgeschaltet wird.

Als Zwischenglied zwischen Gasturbine und Kompressor käme an sich ein hydrodynamischer Wandler in Betracht. Die bisher bekannten Wandler vermögen jedoch die genannten Funktionen nicht zu erfüllen, und zwar bereits aus Festigkeitsgründen. Bei Teilfüllung kommt es wegen der hohen Leistungen zu Kavitation. Bei Vollfüllung kann ein Wandler der bekannten Bauart die geforderten Extremleistungen nicht bewältigen.

Der Erfindung liegt die Aufgabe zugrunde, einen hydrodynamischen Wandler anzugeben, der insbesondere als Zwischenglied zwischen einer Gasturbine und einem Kompressor in Betracht kommt. Ein solcher Wandler soll höchste Leistungen übertragen können und den Synchronlauf zwischen der Gasturbine und dem Kompressor bewirken.

Die Aufgabe wird durch die Merkmale von Anspruch 1 gelöst.

Die Erfinder haben damit eine perfekte Lösung des Problems gefunden, bei Lösung aller genannten Teilaufgaben.

Bisher erstrebte man bei hydrodynamischen Wandlern einen hohen λ-Wert an, um das Bauvolumen des Wandlers klein zu halten. Bei der erfindungsgemäßen Konfiguration ergibt sich zwar ein extrem kleines λ, das weniger als 0,0005 ist. Dabei ist das Drehzahlverhältnis υ zwischen der Drehzahl des Turbinenrades und jener des Pumpenrades eins. Der Wirkungsgrad ist hoch. Er liegt in der Größenordnung von 0,75 und mehr.

Bei der erfindungsgemäßen Konfiguration sind die Kanäle des Pumpenrades im wesentlichen zentrifugal durchströmt. Diejenigen des Turbinenrades sind im wesentlichen zentripetal durchströmt, was bei Wandlern ungewöhnlich ist. Aufgrund dieser Konfiguration lassen sich höchste Leistungen übertragen, bei mäßigem Bauvolumen, hohem Wirkungsgrad und der Fähigkeit, den Synchronisationszustand herzustellen.

Die Erfindung ist anhand der Zeichnung näher erläutert. Darin ist im einzelnen folgendes dargestellt:
- Figur 1: zeigt einen erfindungsgemäßen Wandler mit Zahnkupplung als Zwischenglied zwischen einer nicht gezeigten Gasturbine und einem nicht gezeigten Kompressor.
- Figur 2: zeigt einen vergrößerten Ausschnitt aus dem Gegenstand von Figur 1.
- Figur 3: zeigt einen erfindungsgemäßen Wandler in vergrößertem Maßstab.

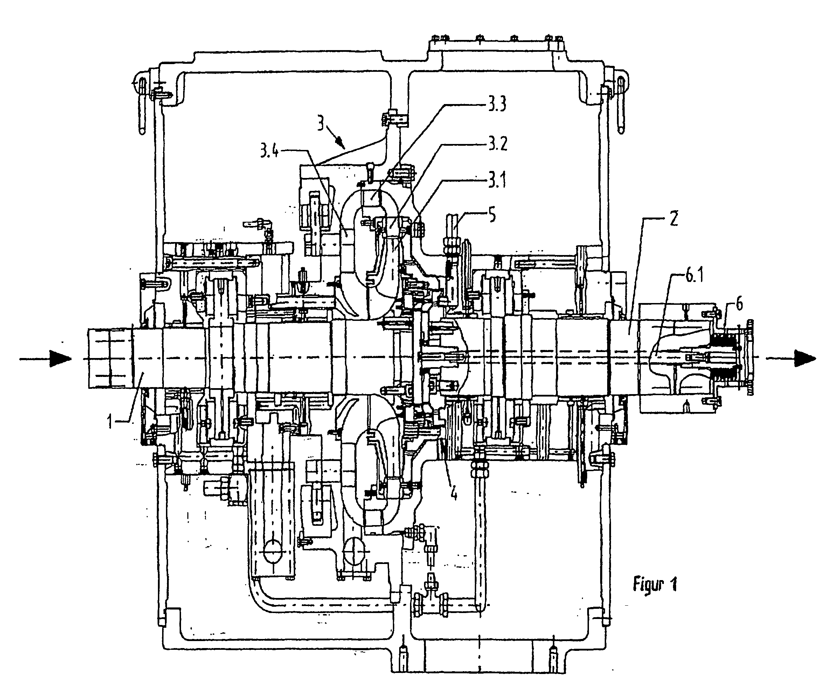

In Figur 1 erkennt man die Eingangswelle 1 sowie die Ausgangswelle 2 des Wandlers. Der Wandler ist zwischengeschaltet zwischen einer hier nicht dargestellten Gasturbine und einem ebenfalls nicht gezeigten Kompressor. Dem Wandler 3 ist eine Zahnkupplung 4 zugeordnet.

Wandler 3 und Zahnkupplung 4 sind zueinander parallel geschaltet. Sowohl der Wandler 3 als auch die Zahnkupplung 4 können Drehmoment von der Eingangswelle 1 zur Ausgangswelle 2 jeweils für sich alleine übertragen, aber auch gemeinsam.

Wandler 3 ist füll- und entleerbar. Er umfaßt ein Pumpenrad 3.1 sowie ein Turbinenrad 3.2. Er umfaßt ferner ein feststehendes Leitschaufelrad 3.3 und ein verstellbares Leitschaufelrad 3.4.

Das Pumpenrad 3.1 des Wandlers 3 ist mit der Eingangswelle 1 drehfest verbunden. Das Turbinenrad 3.2 des Wandlers ist mit der Ausgangswelle 2 drehfest verbunden.

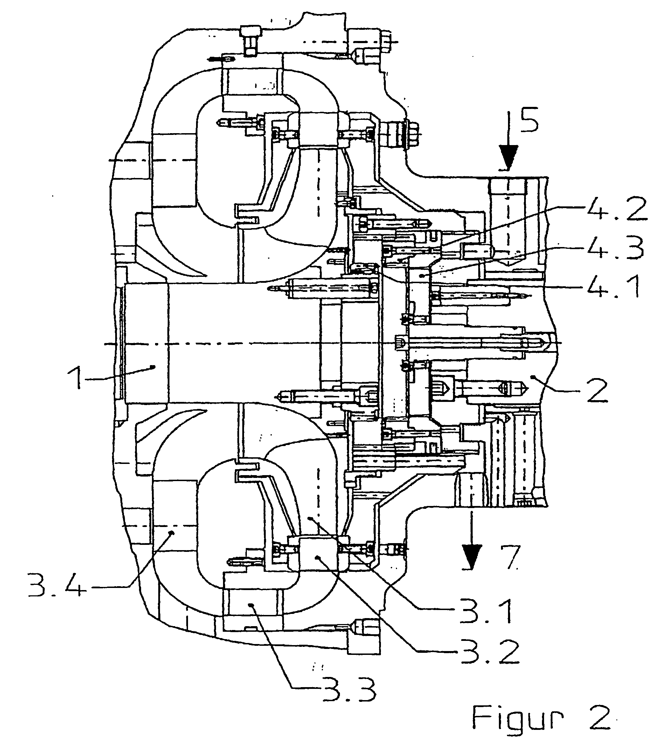

Figur 2 läßt die Verhältnisse im Bereich von Wandler und Zahnkupplung genauer erkennen. Die Zahnkupplung 4 umfaßt zwei Kupplungshälften. Die eine Kupplungshälfte - ein Ritzel 4.1 - ist mit der Eingangswelle 1 drehfest verbunden. Die andere Hälfte - ein Zahnkranz 4.2 - ist mit der Ausgangswelle 2 drehfest verbunden. Zahnkranz 4.2 ist in Figur 2 nach links verschiebbar. Wird diese Verschiebung vorgenommen, so wird damit die Kupplung 4 geschlossen.

Es ist ein Anschluß 5 für Steueröl vorgesehen. Durch diesen läßt sich Steueröl in den Innenraum des Kupplungsgehäuses einleiten, und zwar derart, daß es einen Kolben 4.3 beaufschlagt, der seinerseits den Zahnkranz 4.2 nach links verschiebt. Dem Anschluß 5 ist ein hier nicht dargestelltes Ventil zugeordnet.

In Verbindung mit dem Betätigen der Kupplung ist ein Satz von Tellerfedern 6 von Bedeutung - siehe Figur 5. Während Steueröl bei Einlaß in den Anschluß 5 den Kolben 4.3 nach links verschiebt, und die Kupplung 4 damit schließt, haben die Tellerfedem 6 das entgegengesetzte Bestreben. Sie haben die Tendenz, die Kupplung 4 zu öffnen.

Wie oben beschrieben, wird beim Anfahrvorgang Synchronität zwischen der Gasturbine und dem Kompressor hergestellt, somit auch zwischen der Eingangswelle 1 und der Ausgangswelle 2. Das Synchronität vorliegt, wird von hier nicht gezeigten Sensoren erfaßt. In diesem Augenblick wird das genannte Ventil des Steueröl-Anschlusses 5 geöffnet. Steueröl tritt ein, beaufschlagt den Kolben 4.3 und verschiebt den Zahnkranz 4.2 nach links, so daß die Kupplung 4 geschlossen wird. Sie bleibt so lange geschlossen, als der Druck des Steueröles auf dem Kolben 4.3 stehen bleibt Deswegen läßt man das Ventil vor dem Anschluß 5 so lange geöffnet, als man die Kupplung geschlossen haben möchte.

Wünscht man, die Kupplung 4 zu öffnen, so wird das genannte Ventil des Steueröl-Anschlusses 5 zugesperrt, und an einer anderen Stelle wird dafür gesorgt, daß Steueröl austreten kann, beispielsweise durch Öffnen eines Auslasses 7 - siehe Figur 2. Liegen diese Bedingungen vor - Steuerölzulauf bei Anschluß 5 geschlossen und Steuerölauslauf 7 geöffnet - so wirken allein die Fedem 6 auf den Kolben 4.3 über eine Stange 6.1, so daß der Kolben 4.3 in Figur 2 nach rechts bewegt wird, und damit auch der Zahnkranz 4.2. Die Kupplung wird geöffnet, und es wird kein Drehmoment mehr über die Kupplung 4 übertragen.

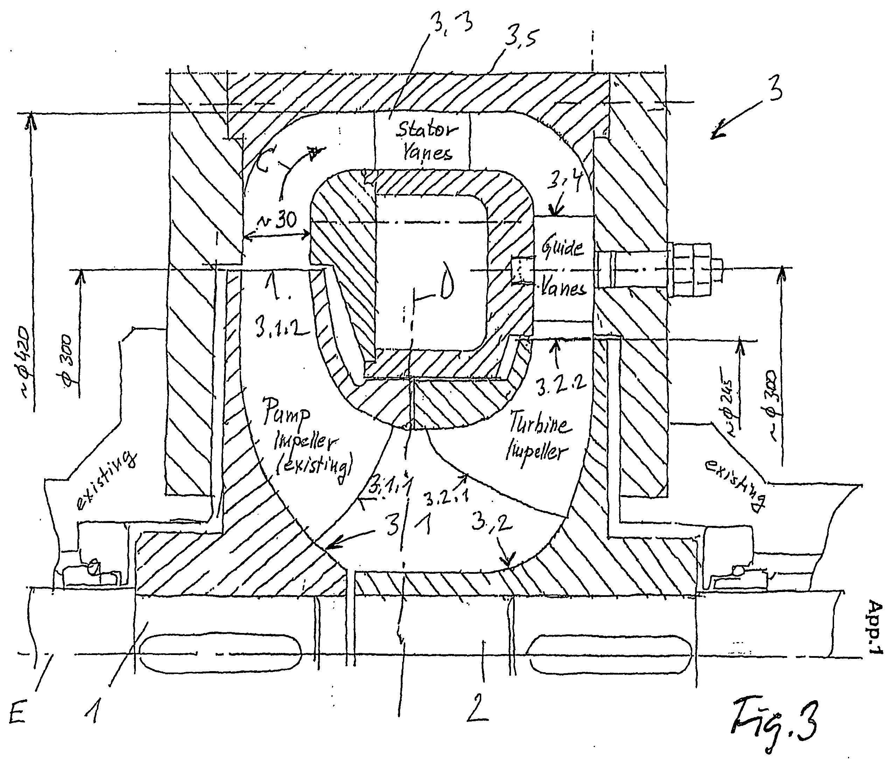

In Figur 3 erkennt man wiederum die Eingangswelle 1 - hier zugleich die Eingangswelle 1 des Wandlers 3, ferner die Antriebswelle 2 des hier nicht gezeigten Kompressors - hier zugleich die Ausgangswellen 2 des Wandlers 3.

Man erkennt wiederum das Pumpenschaufelrad 3.1, das Turbinenschaufelrad 3.2, ein feststehendes Leitschaufelrad 3.3 sowie ein verstellbares Leitschaufelrad 3.4. Der Pfeil C veranschaulicht die Strömungsrichtung in dem Strömungskanal, der im wesentlichen aus dem Wandlergehäuse 3.5 sowie den Schaufeln von Pumpenrad und Turbinenrad gebildet ist. Wie man sieht, sind die Kanäle des Pumpenrades 3.1 zentrifugal durchströmt, während die Kanäle des Turbinenrades 3.2 zentripetal durchströmt sind.

Eine gestrichelt dargestellte Linie D verläuft achssenkrecht zur Drehachse E des Wandlers. Das Pumpenrad 3.1 und das Turbinenrad 3.2 liegen beidseits der Linie D.

Man erkennt die Eintrittskante 3.1.1 und die Austrittskante 3.1.2 einer Pumpenschaufel, sowie die Eintrittskante 3.2.2 und die Austrittskante 3.2.1 einer Turbinenschaufel. Die Eintrittskante 3.1.1 und die Austrittskante 3.2.1 liegen einander unmittelbar gegenüber. Es ist somit kein irgendwie geartetes hydrodynamisches Element mehr zwischengeschaltet. Diese beiden Kanten befinden sich näher bei der Wandlerachse E, als die beiden anderen Kanten 3.1.2 und 3.2.2.

Betrachtet man den Ringkanal, in dem die Strömung gemäß Pfeil C verläuft, annähernd als Kreiskanal, so könnte man sagen, daß sich die Pumpenschaufeln im ersten aufsteigenden Quadranten befinden, und die Turbinenschaufeln im zweiten absteigenden Quadranten.

## Patentansprüche

1. Hydrodynamischer Wandler (3);
1.1 mit einem torusförmigen, die Wandlerachse (E) umgebenden Arbeitsraum, der in einem Axialschnitt gesehen die Gestalt eines Ringkanals mit vier Quadranten aufweist;
1.2 mit einem einzigen Pumpenrad (3.1), das mit einer Eingangswelle (1) drehfest verbunden ist und das eine Vielzahl von Pumpenschaufeln aufweist;
1.3 mit einem einzigen Turbinenrad (3.2), das mit einer Ausgangswelle (2) drehfest verbunden ist und das eine Vielzahl von Turbinenschaufeln aufweist;
1.4 mit einem Kranz (3.4) von verstellbaren Leitschaufeln;
**gekennzeichnet durch** die folgenden Merkmale:
1.5 der Wandler ist derart gestaltet, dass er einen Lambda-Wert von weniger als 0,0005 bei einem Drehzahlverhältnis zwischen der Drehzahl des Turbinenrades (3.2) und jener des Pumpenrades (3.1) von eins aufweist, wobei sich die Pumpenschaufeln in dem ersten aufsteigenden Quadranten befinden, und sich die Turbinenschaufeln im zweiten absteigenden Quadranten befinden, im Hinblick auf eine Strömung(C), welche sich im Ringkanal ausbildet.

2. Wandler nach Anspruch 1 **dadurch gekennzeichnet, daß** die Strömungskanäle des Pumpenrades (3.1) im wesentlichen zentrifugal, und die Strömungskanäle des Turbinenrades (3.2) im wesentlichen zentripetal durchströmt sind.

3. Wandler nach Anspruch 2, **dadurch gekennzeichnet, daß** sich die Eintrittskanten (3.1.1) der Pumpenschaufeln und die Austrittskanten (3.2.1) der Turbinenschaufeln näher bei der Wandlerachse (E) befinden, als die Austrittskanten (3.1.2) der Pumpenschaufeln und als die Eintrittskanten (3.2.2) der Turbinenschaufeln.

4. Wandler nach Anspruch 3, **gekennzeichnet durch** die folgenden Merkmale:
das Pumpenrad (3.1) und das Turbinenrad (3.2) liegen beidseits einer achssenkrechten Ebene (D);
die Eintrittskanten (3.1.1) der Pumpenschaufeln und die Austrittskanten (3.2.1) der Turbinenschaufeln sind einander zugewandt, so daß die Strömungskanäle des Pumpenrades (3.1) zentrifugal, und die Strömungskanäle des Turbinenrades (3.2) zentripetal durchströmt sind.

5. Wandler nach Anspruch 4, **dadurch gekennzeichnet, daß** die Pumpenschaufeln und die Turbinenschaufeln - bezogen auf die achssenkrechte Ebene (D), symmetrisch ausgebildet und angeordnet sind.

6. Maschinensatz für hohe Leistungen;
mit einem Antrieb, der eine Abtriebswelle aufweist;
mit einer Arbeitsmaschine, die eine Antriebswelle aufweist;
mit einem zwischen Antrieb und Arbeitsmaschine geschalteten, füll- und entleerbaren Wandler (3);
mit einer schaltbaren Zahnkupplung (4), die parallel zum Wandler (3) geschaltet ist;
die eine Kupplungshälfte (4.1) ist mit der Abtriebswelle des Antriebs drehfest verbunden;
die andere Kupplungshälfe (4.2) ist mit der Antriebswelle der Arbeitsmaschine drehfest verbunden;
der Wandler ist gemäß einem der Ansprüche 1 bis 5 gestaltet.

## Claims

1. A hydrodynamic converter (3);
1.1 with a toroidal working chamber encompassing the converter axis (E), which chamber has the shape of an annular channel with four quadrants when seen in an axial sectional view;
1.2 with a single pump wheel (3.1) which is torsionally rigidly connected with an input shaft (1) and comprises a plurality of pump blades;
1.3 with a single turbine wheel (3.2) which is torsionally rigidly connected with an output shaft (2) and comprises a plurality of turbine blades;
1.4 with a ring (3.4) of adjustable guide blades;
**characterized by** the following features:
1.5 the converter is configured in such a way that it has a lambda value of less than 0.0005 at a speed ratio between the speed of the turbine wheel (3.2) and that of the pump wheel (3.1) of one, with the pump blades being situated in the first ascending quadrant and the turbine blades being situated in the second descending quadrant, in view of a flow (C) forming in the annular channel.

2. A converter according to claim 1, **characterized in that** the flow channels of the pump wheels (3.1) are flowed through in a substantially centrifugal manner, and the flow channels of the turbine wheel (3.2) are flowed through in a substantially centripetal manner.

3. A converter according to claim 2, **characterized in that** the inlet edges (3.1.1) of the pump blades and the outlet edges (3.2.1) of the turbine blades are situated closer to the converter axis (E) than the outlet edges (3.1.2) of the pump blades and than the inlet edges (3.2.2) of the turbine blades.

4. A converter according to claim 3, **characterized by** the following features:
the pump wheel (3.1) and the turbine wheel (3.2) are situated on either side of a plane (D) perpendicular to the axis;
the inlet edges (3.1.1) of the pump blades and the outlet edges (3.2.1) of the turbine blades face one another, so that the flow channels of the pump wheel (3.1) are flowed through in a centrifugal manner, and the flow channels of the turbine wheel (3.2) are flowed through in a centripetal manner.

5. A converter according to claim 4, **characterized in that** the pump blades and turbine blades are arranged and configured symmetrically relative to the plane (D) which is axially perpendicular.

6. A machine set for high performance;
with a drive comprising a driven shaft;
with an engine comprising a drive shaft;
with a converter (3) which can be filled and emptied and which is switched between drive and engine;
with a switchable denture clutch (4) which is switched parallel to the converter (3);
the one half of the clutch (4.1) is connected in a torsionally rigid manner with the driven shaft of the drive;
the other half of the clutch (4.2) is connected in a torsionally rigid manner with the drive shaft;
the converter is configured according to one of the claims 1 to 5.

## Revendications

1. Convertisseur (3) hydrodynamique;
1.1 avec une enceinte de travail de forme torique entourant l'axe (E) du convertisseur et présentant, en coupe axiale, la forme d'un canal annulaire avec quatre quadrants ;
1.2 avec une seule pompe (3.1) solidaire en rotation d'un arbre d'entrée (1) et comportant une pluralité de pales ;
1.3 avec une seule turbine (3.2) solidaire en rotation d'un arbre de sortie (2) et comportant une pluralité de pales ;
1.4 avec une couronne (3.4) de directrices ajustables ;
**caractérisé par** les particularités suivantes :
1.5 le convertisseur est conformé de manière à avoir une valeur lambda inférieure à 0,0005 pour un rapport entre la vitesse de la turbine (3.2) et de la pompe (3.1) de 1, les pales de la pompe se situant dans le premier quadrant ascendant et les pales de la turbine, dans le deuxième quadrant descendant par rapport à un flux (C) se formant dans le canal annulaire.

2. Convertisseur selon la revendication 1, **caractérisé en ce que** le flux dans les canaux d'écoulement de la pompe (3.1) est sensiblement centrifuge et que le flux dans les canaux d'écoulement de la turbine (3.2) est sensiblement centripète.

3. Convertisseur selon la revendication 2, **caractérisé en ce que** les bords d'attaque (3.1.1) des pales de la pompe et les bords de fuite (3.2.1) des pales de la turbine sont plus rapprochés de l'axe (E) du convertisseur que les bords de fuite (3.1.2) des pales de la pompe et les bords d'attaque (3.2.2) des pales de la turbine.

4. Convertisseur selon la revendication 3, **caractérisé par** les particularités suivantes :
la pompe (3.1) et la turbine (3.2) se situent de part et d'autre d'un plan d'axe vertical (D) ;
les bords d'attaque (3.1.1) des pales de la pompe et les bords de fuite (3.2.1) des pales de la turbine se font face de sorte que le flux dans les canaux d'écoulement de la pompe (3.1) est centrifuge et que le flux dans les canaux d'écoulement de la turbine (3.2) est centripète.

5. Convertisseur selon la revendication 4, **caractérisé en ce que** les pales de la pompe et les pales de la turbine sont conformées et agencées de façon symétrique par rapport au plan d'axe vertical (D).

6. Groupe de machines de haute puissance ;
avec un entraînement comportant un arbre mené ;
avec une machine génératrice comportant un arbre menant ;
avec un convertisseur (3) apte à être rempli et vidé monté entre l'entraînement et la machine génératrice ;
avec un embrayage à dents débrayable (4) monté en parallèle avec le convertisseur (3) ;
l'une des moitiés de l'embrayage (4.1) est solidaire en rotation de l'arbre mené de l'entraînement ;
l'autre moitié de l'embrayage (4.2) est solidaire en rotation de l'arbre menant de la machine génératrice ;
le convertisseur est conformé selon l'une quelconque des revendications 1 à 5.
